**Europäisches Patentamt**

**European Patent Office**

**Office européen des brevets**

(11) Veröffentlichungsnummer: **0 170 888**
**A1**

# EUROPÄISCHE PATENTANMELDUNG

(21) Anmeldenummer: 85108297.4

(22) Anmeldetag: 04.07.85

(51) Int. Cl.⁴: **H 04 N 1/32**

(30) Priorität: **06.07.84 DE 3425025**

(43) Veröffentlichungstag der Anmeldung: **12.02.86 Patentblatt 86/7**

(84) Benannte Vertragsstaaten: **AT BE CH DE IT LI**

(71) Anmelder: **Siemens Aktiengesellschaft, Berlin und München Wittelsbacherplatz 2, D-8000 München 2 (DE)**

(72) Erfinder: **Fellerer, Josef, Dipl.-Phys., Willibaldstrasse 199, D-8000 München 21 (DE)**
Erfinder: **Szabo, Heinz, Dipl.-Phys., Ottobrunnerstrasse 36, D-8000 München 83 (DE)**

(54) Verfahren zur Zwischenspeicherung von Faksimile-Daten.

(57) Faksimile-Datenfolgen, insbesondere Faksimile-Daten der Gruppe 3, werden von einer Ursprungsstation (FAX1) zu einer Zwischenstation (ZST) übertragen. Gemäß einer für die Übertragung zwischen beiden Stationen (FAX1 und ZST) vereinbarten ersten minimalen Zeilenübertragungszeit (T1) gegebenenfalls in den übertragenen Faksimile-Datenfolgen enthaltene Füllinformationen werden in der Zwischenstation (ZST) vor ihrer Abspeicherung ausgeblendet.

In Faksimile-Datenfolgen, die von der Zwischenstation (ZST) an eine Zielstation (FAX2) zu übertragen sind, werden Füllinformationen, insbesondere Füllbits «0», gemäß einer für die Übertragung zwischen beiden Stationen (ZST und FAX2) vereinbarten zweiten minimalen Zeilenübertragungszeit (T2) eingeblendet.

Siemens Aktiengesellschaft     Unser Zeichen

Berlin und München     VPA **84** P **1** 4 **89** E

Verfahren zur Zwischenspeicherung von Faksimile-Daten

Die Erfindung betrifft ein Verfahren zur Zwischenspeicherung von Faksimile-Daten, wobei Faksimile-Datenfolgen von einer Ursprungsstation zu einer Zwischenstation übertragen und dort in einem Datenspeicher zwischengespeichert werden.

Aus der DE-OS 33 06 706 Al ist bereits ein sogenannter Faksimile-Sende-Empfänger bekannt, der von einer ersten entfernten Faksimile-Station übertragene Daten vorübergehend speichert und in Abhängigkeit von einer Daten-Weitergabeforderung der ersten Station an eine zweite entfernte Faksimile-Station überträgt. Faksimile-Daten der Gruppe 3 können Nutzdaten, die den Inhalt der zu übertragenden Faksimile-Vorlage bezeichnen, auch Daten umfassen, die nur zur Herstellung einer minimalen Zeilenübertragungszeit dienen und nicht den Inhalt der Vorlage darstellen. Der bekannte Faksimile-Sende-Empfänger speichert offenbar alle von der ersten Station übertragenen Daten ab, also auch solche, die den Inhalt der zu übertragenden Faksimile-Vorlage nicht darstellen.

Der Erfindung liegt die Aufgabe zugrunde, ein Verfahren und eine Anordnung zur Zwischenspeicherung von Faksimile-Daten anzugeben, wobei nur eine geringe Speicherkapazität erforderlich sein soll.

Die Aufgabe wird erfindungsgemäß dadurch gelöst, daß in der Zwischenstation Füllinformationen, die gemäß einer für die Übertragung zwischen Ursprungsstation und Zwi-

Dl 1 Sur / 28.06.1984

**0170888**

schenstation vorgegebenen ersten minimalen Zeilenübertragungszeit in der Ursprungsstation in die Faksimile-Datenfolgen eingefügt wurden, als solche erkannt werden und
daß die Füllinformationen aus den Faksimile-Datenfolgen
vor der Abspeicherung in den Datenspeicher ausgeblendet
werden.

Die Erfindung zeichnet sich durch den Vorteil aus, daß
Faksimile-Datenfolgen in einfacher Weise unter Einsparung
von Speicherkapazität abspeicherbar sind, ohne daß am Ort
der Zwischenspeicherung Faksimiles zu erstellen sind.

Die Erfindung zeichnet sich durch den weiteren Vorteil
aus, daß unterschiedliche minimale Zeilenübertragungszeiten zwischen Ursprungs- und Zwischenstation einerseits
sowie zwischen Zwischen- und Zielstation andererseits in
einfacher Weise realisierbar sind.

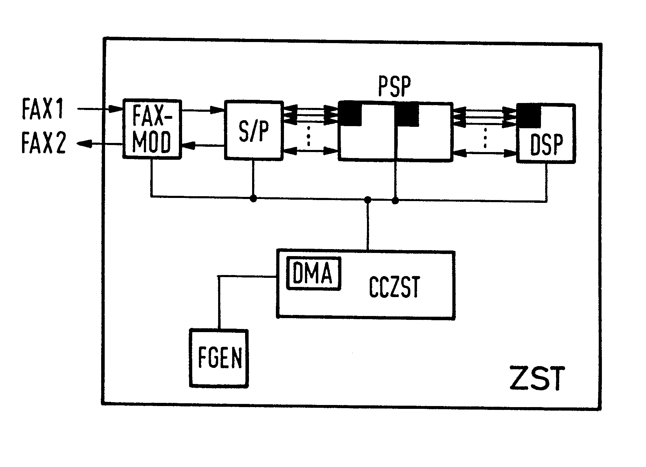

Die Erfindung wird nun anhand der Zeichnung in einem zum
Verständnis erforderlichen Umfang beschrieben.

Die Zeichnung zeigt eine Anordnung zur Zwischenspeicherung
von Faksimile-Daten. Sie besteht aus einem Faksimile-Modem FAX-MOD, einem mit diesem verbundenen Seriell-/Parallelwandler S/P, aus einem mit diesem verbundenen Pufferspeicher PSP, aus einem Datenspeicher DSP, aus einem
Füllbitgenerator FGEN sowie aus einem zentralen Steuerwerk
CCZST zur Steuerung der vorgenannten Baugruppen. Das zentrale Steuerwerk CCZST kann eine Hardwaresteuerung DMA
für die Informationsübertragung vom Seriell-/Parallelwandler S/P in den Pufferspeicher PSP aufweisen.

Empfehlungen des Comite Consultatif International Télégraphique et Téléphonique CCITT unterteilen Fernkopierer
oder Faksimilegeräte in drei verschiedene Gruppen, die sich unter anderem durch ihre Signalaufbereitung und die daraus resultierende Übertragungsgeschwindigkeit der von einer Vorlage abgetasteten Bildpunktinformationen unterscheiden. Geräte der Gruppe 1 und 2 arbeiten in Analogtechnik, die Übertragungszeit je A4-Seiten beträgt 6 bzw. 3 Minuten. Die digital arbeitenden Geräte der Gruppe 3 ermöglichen geringere, von der zu übertragenden Informationsmenge abhängige Übertragungszeiten.

Die Faksimile-Übertragung zwischen Geräten der Gruppen 1, 2 und 3 erfolgt bekanntermaßen in mehreren Schritten: Zunächst erfolgt die Fernsprechverbindung zum Fernkopieren in der für Fernsprechbetrieb üblichen Weise. Nach dem Umschalten der Fernsprechleitung zum Fernkopierer erfolgt die sogenannte Einleitungsphase, in der die möglichen Gerätefunktionen identifiziert und die Betriebsverfahren ausgewählt werden. Danach schließt sich die eigentliche Dokumentenübertragung an. Die sogenannte Schlußphase beinhaltet das Beenden der Dokumentenübertragung mit den entsprechenden Bestätigungssignalen. Schließlich wird auf Fernsprechbetrieb zurückgeschaltet.

Während der Dokumentenphase wird in einer sendeseitigen Einrichtung das Original für die Abtastung punktförmig beleuchtet. Das reflektierte Licht erzeugt, über eine Optik auf einen photoelektrischen Sensor konzentriert, ein dem Schwärzungsgrad der Vorlage entsprechendes elektrisches Bildpunktsignal, das in Systemen der Gruppe 3 codiert, ansonsten unmittelbar durch ein Modem moduliert und an eine empfangsseitige Einrichtung übertragen wird. Nach der dortigen Demodulation durch ein Modem werden die Bildpunktsignale in Bildpunkte zurückgewandelt.

Mit Faksimilegeräten der Gruppe 3 ist die Übertragung nur von weißen und schwarzen Bildpunkten, nicht jedoch von

0170888

Grautönen realisierbar. Hohe Übertragungsgeschwindigkeiten werden durch redundanzreduzierende Quellencodierungsverfahren erzielt. Eine Gruppe (Lauflänge) von jeweils nur weißen oder nur schwarzen zusammenhängenden Bildpunkten einer Zeile wird durch ein Codewort dargestellt, wobei sich weiße und schwarze Gruppen abwechseln. Als Basismerkmal bilden üblicherweise insgesamt 1728 Bildpunkte eine horizontale Abtastzeile von 215 mm Länge. Auf diese Abmessungen ist das erfindungsgemäße Verfahren jedoch nicht beschränkt. Es ist ebenso wenig auf ein bestimmtes redundanzreduzierendes Quellencodierungsverfahren, beispielsweise den sogenannten modifizierten Huffmann-Code, beschränkt.

Der modifizierte Huffmann-Code sieht zwei Typen von Codeworten vor, Basis-Codeworte und Abschnitts-Codeworte. Jede Lauflänge wird entweder durch ein Basis-Codewort oder durch eine Folge von einem Abschnitts-Codewort und einem Basis-Codewort dargestellt. Lauflängen im Bereich von 0 bis 63 Bildelemente werden durch besonders vorgesehene Basis-Codeworte codiert. Für schwarze und weiße Lauflängen bestehen unterschiedliche Listen.

Lauflängen im Bereich von 64 bis 1728 Bildpunkten werden zunächst durch ein Abschnitts-Codewort codiert, das gleich oder kleiner als die zu codierende Lauflänge ist. Auf dieses Codewort folgt ein Basis-Codewort, das die Differenz zwischen der Lauflänge und der durch das Abschnitts-Codewort dargestellten Lauflänge angibt.

Die Darstellung von Bildpunkten jeweils einer Zeile erfolgt durch Codeworte, die sich in Abhängigkeit von der Anzahl zusammenhängender weißer und schwarzer Bildpunkte erheblich in ihrer Gesamtlänge unterscheiden können. Eine nur aus weißen Bildpunkten bestehende Zeile wird im modifizierten Huffmann-Code beispielsweise durch ein einziges, aus 9 Bits ("0" und "1") bestehendes Codewort gebildet, während etwa eine Zeile mit häufigem Wechsel weißer und schwarzer zusammenhängender Bildpunkte durch eine Vielzahl von Codeworten dargestellt wird und die codierte Zeileninformation aus einer sehr großen Zahl von Bits ("0" und "1") besteht. Die Gesamtlänge aller eine Zeile darstellenden Codeworte kann also erhebliche Unterschiede aufweisen.

Neben der vollständigen codierten Zeileninformation wird pro Zeile ein das Zeilenende markierende, von der gültig codierten Zeileninformation unterscheidbares Zeilenend-Codewort in die Gesamtdatenfolge eingefügt. Zusätzlich können sogenannte Füllbits zwischen die codierten Zeileninformation und das Zeilenend-Codewort eingefügt werden. Diese Füllbits sind sowohl von der codierten Zeileninformation als auch von den Zeilenend-Codeworten unterscheidbar. Die Einfügung von Füllbits ist erforderlich, um sicherzustellen, daß die Übertragungszeit der codierten Zeileninformation, Füllbits und Zeilenend-Codewort nicht kürzer als eine festzulegende minimale Übertragungszeit der vollständig codierten Abtastzeile ist. Die Festlegung einer minimalen Zeilenübertragungszeit zwischen einer sendenden und einer empfangenden Station der Gruppe 3 ist notwendig, um der relativ geringen, die Abspeicherung weniger Zeilen ermöglichender Zwischenspeicherkapazität und der benötigten Zeit für die grafische Reproduktion in der empfangenden Station Rechnung zu tragen. Die minimale Zeilenübertragungszeit wird vor der eigentlichen Dokumentenübertragung zwischen sendendedr und empfangender Station vereinbart. Die Anzahl der einzufügenden Füllbits resultiert aus dem Verhältnis der Differenz, die sich aus der minimalen Zeilenübertragungszeit und der Übertragungszeit für die codierte Zeileninformation und das Zeilenende-Codewort ergibt, zu der Übertragungszeit für ein Füllbit.

0170888

Die in der Zeichnung dargestellte Anordnung ZST dient zur Zwischenspeicherung von Faksimile-Daten, insbesondere von Faksimile-Daten der Gruppe 3. Eine Ursprungsstation FAX1 der Gruppe 3 fügt in eine zur Anordnung ZST zu übertragende Faksimile-Datenfolge Füllinformationen ein, insbesondere Füllbits "0", gemäß einer für die Übertragung zwischen Ursprungsstation FAX1 und Zwischenstation ZST vorgegebenen ersten minimalen Zeilenübertragungszeit T1. Die Faksimile-Datenfolgen werden von der Ursprungsstation FAX1 zu der Zwischenstation ZST übertragen, dort von dem Faksimile-Modem FAX-MOD demoduliert und durch die zentrale Steuerung CCZST dem Seriell-/Parallelwandler S/P und dem Pufferspeichedr PSP zugeführt, der wie in der Zeichnung dargestellt, aus zwei Teilen bestehen kann. Die zentrale Steuerung CCZST überprüft die in den einen Teil des Pufferspeichers PSP eingelesenen Faksimile-Datenfolgen auf Füllinformationen, die sowohl von codierten Zeileninformationen als auch von Zeilenend-Codeworten unterscheidbar sind. Füllinformationen werden von der zentralen Steuerung CCZST aus der in dem einen Teil des Pufferspeichers PSP abgespeicherten Faksimile-Datenfolgen ausgeblendet, in einem in der Zeichnung nicht dargestellten, gegebenenfalls der zentralen Steuerung CCZST zugeordneten Zwischenspeicher zwischengespeichert und anschließend im Datenspeicher DSP abgespeichert. Während der beschriebenen Bearbeitung, insbesondere Ausblendung der Füllbits, der in der einen Hälfte des Pufferspeichers PSP abgespeicherten Daten werden weitere Daten aus dem Seriell-/Parallelwandler S/P in die andere Hälfte des Pufferspeichers PSP eingelesen. Nach der Bearbeitung der ersten Daten erfolgt die Bearbeitung der zweiten Daten.

Die Übertragung der Informationen aus dem Seriell-/Parallelwandler S/P in den Pufferspeicher PSP erfolgt vorzugsweise mit einer Hardware-Steuerung Direct Memory Access DMA, die in die zentrale Steuerung CCZST integriert sein kann. Während der eigentlichen Füllbitausblendung kann auf diese Weise die Übertragungsfunktion realisiert werden.

Auf diese Weise kann die Abspeicherung einer bestimmten Vorlagenmenge mit erheblich geringerer Speicherkapazität realisiert werden. Die Ersparnis an benötigter Speicherkapazität des Datenspeichers DSP verhält sich proportional zu den Füllbits, die ursprünglich in den der Anordnung ZST zugeführten Faksimile-Datenfolgen enthalten waren.

Zur Übertragung der in der Zwischenstation ZST abgespeicherten Faksimile-Datenfolgen an eine Zielstation FAX2 der Gruppe 3 wird vor der eigentlichen Dokumentenübertragung eine zweite minimale Zeilenübertragungszeit T2 zwischen der Anordnung ZST und der Zielstation FAX2 vereinbart. Die zentrale Steuerung CCZST ruft die abgespeicherten Daten aus dem Datenspeicher DSP ab und führt sie dem Pufferspeicher PSP zu. Gemäß der vereinbarten minimalen Zeilenübertragungszeit T2 blendet die zentrale Steuerung CCZST mit Hilfe des Füllbitgenerators FGEN in die im Pufferspeicher PSP zwischengespeicherte Faksimile-Datenfolge ein. Die in dieser Weise aufbereitete Datenfolge wird dem Seriell-/Parallelwandler S/P und dem Faksimile-Modem FAX-MOD zugeführt und an die Zielstation FAX2 übertragen.

Eine Einblendung von Füllinformationen, insbesondere von Füllbits "0", durch die zentrale Steuerung CCZST unterbleibt, wenn eine minimale Zeilenübertragungszeit T2 von 0 Millisekunden vereinbart wird.

Die Anordnung ZST, die vorstehend anhand des erfindungsgemäßen Verfahrens beschrieben wurde, kann einen Daten-

- 8 - VPA 0170888 84 P 1489 E

speicher DSP aufweisen, der beispielsweise als Platten- oder Bandspeicher ausgebildet ist.

0170888

## Patentansprüche

1. Verfahren zur Zwischenspeicherung von Faksimile-Daten, wobei Faksimile-Datenfolgen von einer Ursprungsstation zu einer Zwischenstation übertragen, dort in einem Datenspeicher zwischengespeichert werden, d a - d u r c h  g e k e n n z e i c h n e t, daß in der Zwischenstation (ZST) Füllinformationen, die gemäß einer für die Übertragung zwischen Ursprungsstation (FAX1) und Zwischenstation (ZST) vorgegebenen ersten minimalen Zeilenübertragungszeit (T1) in der Ursprungsstation (FAX1) in die Faksimile-Datenfolgen eingefügt wurden, als solche erkannt werden und daß die Füllinformationen aus den Faksimile-Datenfolgen vor der Abspeicherung in den Datenspeicher (DSP) ausgeblendet werden.

2. Verfahren nach Anspruch 1, d a d u r c h  g e - k e n n z e i c h n e t, daß die Füllinformationen aus Bits "Null" bestehen.

3. Verfahren nach Anspruch 1 oder 2, d a d u r c h g e k e n n z e i c h n e t, daß in der Zwischenstation (ZST) die abgespeicherten Faksimile-Datenfolgen aus dem Datenspeicher (DSP) ausgelesen werden und daß Füllinformationen gemäß einer für die Übertragung zwischen Zwischenstation (ZST) und einer Zielstation (FAX2) vorgegebenen zweiten minimalen Zeilenübertragungszeit (T2) in die Faksimile-Datenfolgen vor ihrer Übertragung an die Zielstation (FAX2) eingeblendet werden.

4. Verfahren nach Anspruch 3, d a d u r c h  g e - k e n n z e i c h n e t, daß die Füllinformationen aus Bits "Null" bestehen.

0170888

5. Anordnung zur Durchführung des Verfahrens nach einem der Ansprüche 1 bis 4, g e k e n n z e i c h n e t durch ein Faksimile-Modem (FAX-MOD), einen mit diesem verbundenen Seriell-/Parallelwandler (S/P), einen mit diesem verbundenen Pufferspeicher (PSP), einen Datenspeicher (DSP), einen Füllbitgenerator (FGEN) sowie ein zentrales Steuerwerk (CCZST) zur Steuerung der vorgenannten Baugruppen.

6. Anordnung nach Anspruch 5, d a d u r c h  g e - k e n n z e i c h n e t, daß das zentrale Steuerwerk (CCZST) eine Hardwaresteuerung DMA für die Informationsübertragung vom Seriell-/Parallelwandler (S/P) in den Pufferspeicher (PSP) aufweist.

FAX1

FAX2

FAX-MOD

S/P

PSP

DSP

DMA   CCZST

FGEN

ZST

Europäisches
Patentamt

**EUROPÄISCHER RECHERCHENBERICHT**

0170888
Nummer der Anmeldung

EP 85 10 8297

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A,D | DE-A-3 306 706 (RICOH) <br> * Seite 5, Zeile 3 - Seite 8, Zeile 19; Figur * <br><br> ----- | 1 | H 04 N 1/32 |
| | | | **RECHERCHIERTE SACHGEBIETE (Int. Cl.4)** |
| | | | H 04 N 1/00 |

Der vorliegende Recherchenbericht wurde für alle Patentansprüche erstellt.

| Recherchenort <br> BERLIN | Abschlußdatum der Recherche <br> 04-09-1985 | Prüfer <br> DUDLEY C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82